# EUROPEAN PATENT APPLICATION

(11) **EP 3 709 659 A1**
(43) Date of publication of application: **16.09.2020**
(21) Application number: 19305280.0
(22) Date of filing: 11.03.2019
(51) Int. Cl.: H04N 21/218, H04N 21/234, H04N 21/2343, H04N 21/845, G06T 15/20, H04N 19/597, H04N 13/161, H04N 21/235, H04N 21/41, H04N 21/414, H04N 21/84

(54) **A METHOD AND APPARATUS FOR ENCODING AND DECODING VOLUMETRIC VIDEO**

(71) Applicant: InterDigital VC Holdings, Inc., Wilmington, DE 19809 (US)
(72) Inventor: CHUPEAU, Bertrand, 35576 Cesson-Sévigné (FR); DORE, Renaud, 35576 Cesson-Sévigné (FR); THUDOR, Franck, 35576 Cesson-Sévigné (FR)
(74) Representative: Huchet, Anne

(57) **Abstract**

Methods, devices and stream are disclosed to encode and decode a 3D scene (such as a point cloud) in the context of a patch-based transmission of a volumetric video content. The present principles relate a method of associating to each projection center a domain of validity with respect to the viewing location. Doing so, the rendering engine is able to select the subset of patches among all patches transmitted in the patch atlas, which is best suited to the current viewport pose. Such validity information is explicitly transmitted as additional metadata within the volumetric video content stream.

## Description

### 1. Technical Field

The present principles generally relate to the domain of three-dimensional (3D) scene and volumetric video content. The present document is also understood in the context of the encoding, the formatting and the decoding of data representative of the texture and the geometry of a 3D scene for a rendering of volumetric content on end-user devices such as mobile devices or Head-Mounted Displays (HMD).

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

Recently there has been a growth of available large field-of-view content (up to 360°). Such content is potentially not fully visible by a user watching the content on immersive display devices such as Head Mounted Displays, smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

Immersive video, also called 360° flat video, allows the user to watch all around himself through rotations of his head around a still point of view. Rotations only allow a 3 Degrees of Freedom (3DoF) experience. Even if 3DoF video is sufficient for a first omnidirectional video experience, for example using a Head-Mounted Display device (HMD), 3DoF video may quickly become frustrating for the viewer who would expect more freedom, for example by experiencing parallax. In addition, 3DoF may also induce dizziness because of a user never only rotates his head but also translates his head in three directions, translations which are not reproduced in 3DoF video experiences.

A large field-of-view content may be, among others, a three-dimension computer graphic imagery scene (3D CGI scene), a point cloud or an immersive video. Many terms might be used to design such immersive videos: Virtual Reality (VR), 360, panoramic, 4π steradians, immersive, omnidirectional or large field of view for example.

Volumetric video (also known as 6 Degrees of Freedom (6DoF) video) is an alternative to 3DoF video. When watching a 6DoF video, in addition to rotations, the user can also translate his head, and even his body, within the watched content and experience parallax and even volumes. Such videos considerably increase the feeling of immersion and the perception of the scene depth and prevent from dizziness by providing consistent visual feedback during head translations. The content is created by the means of dedicated sensors allowing the simultaneous recording of color and depth of the scene of interest. The use of rig of color cameras combined with photogrammetry techniques is a way to perform such a recording, even if technical difficulties remain.

While 3DoF videos comprise a sequence of images resulting from the un-mapping of texture images (e.g. spherical images encoded according to latitude/longitude projection mapping or equirectangular projection mapping), 6DoF video frames embed information from several points of views. They can be viewed as a temporal series of point clouds resulting from a three-dimension capture. Two kinds of volumetric videos may be considered depending on the viewing conditions. A first one (i.e. complete 6DoF) allows a complete free navigation within the video content whereas a second one (aka. 3DoF+) restricts the user viewing space to a limited volume called viewing bounding box, allowing limited translation of the head and parallax experience. This second context is a valuable trade-off between free navigation and passive viewing conditions of a seated audience member.

A technical approach for the encoding of volumetric video is based on the projection of the 3D scene onto a multiplicity of2D images, called patches, packed into atlases which can be further compressed using conventional video encoding standards (e.g., HEVC). At the decoding, using every patch of an atlas to prepare the rendering of the 3D scene in the current viewport is not always required, nor desirable. Indeed, some patches comprise information about points that are not visible from the current point of view and, for a given part of the 3D scene to be rendered, some patches comprise information more accurate than other patches comprising information for the same part of the scene when viewed from the current point of view.

There is a lack of a data stream format for encoding volumetric video which enables the decoder to select a subset of patches within the obtained atlas, to be used by the rendering engine, the subset depending on the current point of view.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

In the context of a patch-based transmission of a volumetric video content, the present principles relate a method of associating to each projection center a domain of validity with respect to the viewing location. Doing so, the rendering engine is able to select the subset of patches among all patches transmitted in the patch atlas, which is best suited to the current viewport pose. Such validity information is explicitly transmitted as additional metadata within the volumetric video content stream.

The present disclosure relates to a method for decoding a 3D scene viewed from a point of view located in a viewing zone of the 3D space of the 3D scene. The method comprises the decoding of an atlas and metadata from a data stream. The atlas is image data representative of at least one patch; a patch being image data representative of a projection of a part of the 3D scene onto an image plane. The metadata comprise at least one validity domain associated with at least one patch of the atlas; a validity domain being an information representative of a part of said viewing zone of the 3D space of the 3D scene. Then, the method comprises de-projecting pixels of patches associated with a validity domain encompassing the point of view.

The present disclosure also relates to a method for encoding a 3D scene to be viewed from a viewing zone of the space of the 3D scene. The method comprises encoding an atlas and metadata as defined above.

The present disclosure also relates to a data stream comprising an atlas and the metadata as defined above and to devices implementing these two methods.

### 4. Brief Description of Drawings

The present disclosure will be better understood, and other specific features and advantages will emerge upon reading the following description, the description making reference to the annexed drawings wherein:
- **Figure 1** shows a three-dimension (3D) model of an object and points of a point cloud corresponding to the 3D model, according to a non-limiting embodiment of the present principles;
- **Figure 2** shows a non-limitative example of the encoding, transmission and decoding of data representative of a sequence of 3D scenes, according to a non-limiting embodiment of the present principles;
- **Figure 3** shows an example architecture of a device which may be configured to implement a method described in relation with figures 11 and 12 according to a non-limiting embodiment of the present principles;
- **Figure 4** shows an example of an embodiment of the syntax of a stream when the data are transmitted over a packet-based transmission protocol, according to a non-limiting embodiment of the present principles;
- **Figure 5** shows an example of a patch-based representation of a three-dimensional (3D) scene, according to a non-limiting embodiment of the present principles;
- **Figure 6** shows an example of an atlas comprising the texture information of the points of a 3D scene, according to a non-limiting embodiment of the present principles;
- **Figure 7** shows an example of an atlas comprising the depth information of the points of the 3D scene of figure 6, according to a non-limiting embodiment of the present principles;
- Error! Reference source not found. shows an example of validity domains located in a viewing zone set up as a navigation path, according to a non-restrictive embodiment of the present principles;
- **Figure 9** shows an example of three overlapping validity domains for projection centers within a spherical viewing zone, according to a non-restrictive embodiment of the present principles;
- **Figure 10** shows an example of a linear 7-cameras acquisition rig
- **Figure 11** illustrates a method of encoding a 3D scene for a viewing zone in a data stream according to a non-restrictive embodiment of the present principles;
- **Figure 12** illustrates a method of decoding a 3D scene for a point of view in a viewing zone from a data stream according to a non-restrictive embodiment of the present principles.

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

In the context of a patch-based encoding of a 3D scene, the data stream comprises metadata comprising information about each patch of the atlas. Via these patch data, each patch is associated to projection data comprising the parameters of the virtual camera which captures the patch at the encoding. At the decoding, these parameters (e.g. pose and 3D-to-2D projection method) of the virtual cameras are retrieved from the stream, in order to perform the inverse 2D-to-3D conversion.

A volumetric video is prepared (i.e. analyzed and encoded) to be rendered from a viewing zone that is a part of the 3D space of the 3D scene. Points of the 3D scene visible from any point of view of this viewing zone are encoded in the patches of the atlas. If the decoded 3D scene is viewed from a point of view outside of the viewing zone, some points are missing and the 3D scene is incomplete and/or present strong visual artifacts. In a 3DoF rendering mode, the viewing zone is limited to a point of the 3D space of the 3D scene. In a 3DoF+ rendering mode, the viewing zone is a limited region around an initial point of the 3D space. In 6DoF, the viewing zone is the entire 3D space of the 3D scene.

The present principles relate methods, data stream and devices for associating patches of the atlas with a validity domain that is a part of the viewing zone. This association is encoded via formatted metadata linked to the atlas in the data stream. When decoded, these metadata allow the rendering engine to select the subset of patches in the atlas which are associated to a validity domain encompassing the current point of view. Validity domains are determined to make these patches the best suited to the current point of view as comprising information for every visible point of the 3D scene from this point of view and the most accurate information for these points among the different patches encoding these points.

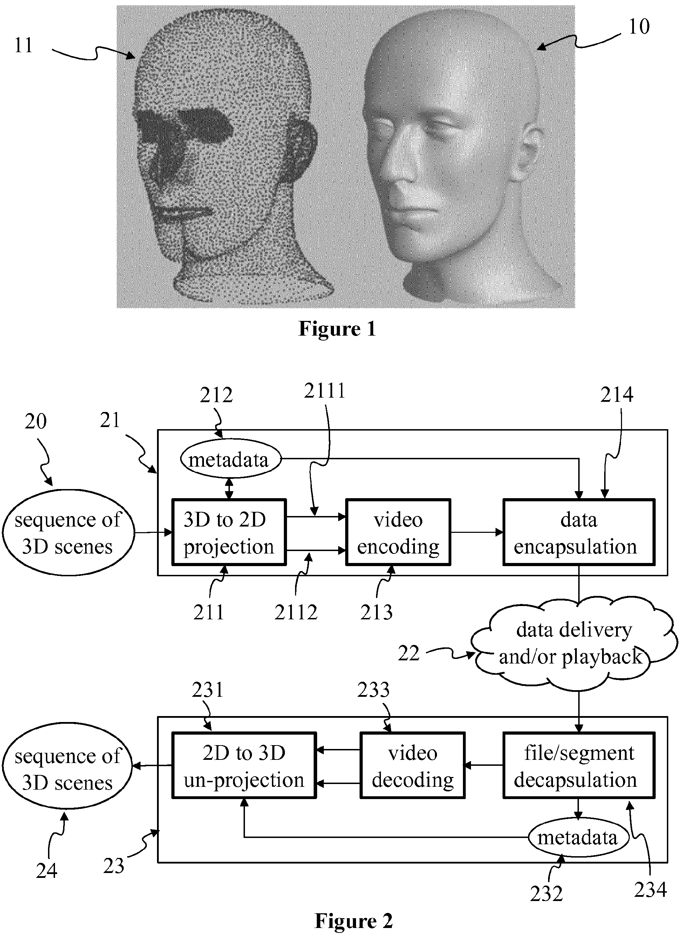

**Figure 1** shows a three-dimension (3D) model 10 of an object and points of a point cloud 11 corresponding to 3D model 10. 3D model 10 and the point cloud 11 may for example correspond to a possible 3D representation of an object of the 3D scene comprising other objects. Model 10 may be a 3D mesh representation and points of point cloud 11 may be the vertices of the mesh. Points of point cloud 11 may also be points spread on the surface of faces of the mesh. Model 10 may also be represented as a splatted version of point cloud 11, the surface of model 10 being created by splatting the points of the point cloud 11. Model 10 may be represented by a lot of different representations such as voxels or splines. Figure 1 illustrates the fact that a point cloud may be defined with a surface representation of a 3D object and that a surface representation of a 3D object may be generated from a point of cloud. As used herein, projecting points of a 3D object (by extension points of a 3D scene) onto an image is equivalent to projecting any representation of this 3D object, for example a point cloud, a mesh, a spline model or a voxel model.

A point cloud may be represented in memory, for instance, as a vector-based structure, wherein each point has its own coordinates in the frame of reference of a viewpoint (e.g. three-dimensional coordinates XYZ, or a solid angle and a distance (also called depth) from/to the viewpoint) and one or more attributes, also called component. An example of component is the color component that may be expressed in various color spaces, for example RGB (Red, Green and Blue) or YUV (Y being the luma component and UV two chrominance components). The point cloud is a representation of a 3D scene comprising objects. The 3D scene may be seen from a given viewpoint or a range of viewpoints. The point cloud may be obtained by many ways, e.g.:
- from a capture of a real object shot by a rig of cameras, optionally complemented by depth active sensing device;
- from a capture of a virtual/synthetic object shot by a rig of virtual cameras in a modelling tool;
- from a mix of both real and virtual objects.

**Figure 2** shows a non-limitative example of the encoding, transmission and decoding of data representative of a sequence of 3D scenes. The encoding format that may be, for example and at the same time, compatible for 3DoF, 3DoF+ and 6DoF decoding.

A sequence of3D scenes 20 is obtained. As a sequence of pictures is a 2D video, a sequence scenes is a 3D (also called volumetric) video. A sequence scenes is provided according to a viewing zone from which the 3D scene may be viewed at the decoding side. 3D scenes may be provided to a volumetric video rendering device for a 3DoF, 3Dof+ or 6DoF rendering and displaying.

Sequence of 3D scenes 20 is provided to an encoder 21. The encoder 21 takes one 3D scenes or a sequence of 3D scenes as input and provides a bit stream representative of the input. The bit stream may be stored in a memory 22 and/or on an electronic data medium and may be transmitted over a network 22. The bit stream representative of a sequence of 3D scenes may be read from a memory 22 and/or received from a network 22 by a decoder 23. Decoder 23 is inputted by said bit stream and provides a sequence of 3D scenes, for instance in a point cloud format.

Encoder 21 may comprise several circuits implementing several steps. In a first step, encoder 21 projects each 3D scene onto at least one 2D picture. 3D projection is any method of mapping three-dimensional points to a two-dimensional plane. As most current methods for displaying graphical data are based on planar (pixel information from several bit planes) two-dimensional media, the use of this type of projection is widespread, especially in computer graphics, engineering and drafting. Projection circuit 211 provides at least one two-dimensional frame 2111 for a 3D scene of sequence 20. Frame 2111 comprises color information and depth information representative of the 3D scene projected onto frame 2111. In a variant, color information and depth information are encoded in two separate frames 2111 and 2112.

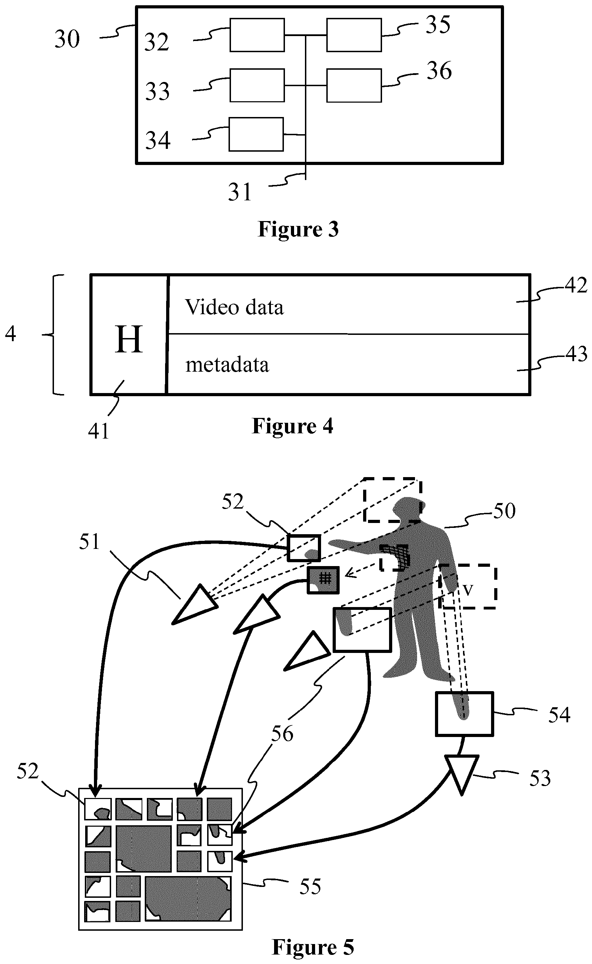

Metadata 212 are used and updated by projection circuit 211. Metadata 212 comprise information about the projection operation (e.g. projection parameters) and about the way color and depth information is organized within frames 2111 and 2112 as described in relation to figures 5 to 7.

According to the present principles, at least one validity domain is determined by projection circuit 211. A validity domain is an information describing a part of the viewing zone. A validity domain may be representative of a connected 3D region or a possibly disconnected union of connected regions. Projection circuit 211 associates every patch it generated with a validity domain. In a variant, projection circuit 211 does not associate some of the patches with any validity domain, indicating that the validity domain of this patch is the entire viewing zone. A part of the 3D space is delimited and associated with a patch when the information projected onto this patch are necessary and accurate to re-build the 3D scene for a view from a point of view encompassed in this part of the 3D space at the rendering. A same validity domain may be associated with several patches. A description of determined validity domains and the associations between patches and validity domains is added to metadata 212, so these information is going to be encapsulated in the data stream by data encapsulation circuit 214.

In an embodiment of the present principles, validity domains are determined in relation to centers of projection. The validity domain determined for one center of projection is associated with every patch generated according to this projection center as described in reference to figure 5. Descriptions of validity domains added in metadata 212 are associated with projection data describing the different projection operations used to generate patches of the atlas.

A video encoding circuit 213 encodes sequence of frames 2111 and 2112 as a video. Pictures of a 3D scene 2111 and 2112 (or a sequence of pictures of the 3D scene) is encoded in a stream by video encoder 213. Then video data and metadata 212 are encapsulated in a data stream by a data encapsulation circuit 214.

Encoder 213 is for example compliant with an encoder such as:
- JPEG, specification ISO/CEI 10918-1 UIT-T Recommendation T.81, https://www.itu.int/rec/T-REC-T.81/en;
- AVC, also named MPEG-4 AVC or h264. Specified in both UIT-T H.264 and ISO/CEI MPEG-4 Part 10 (ISO/CEI 14496-10), http://www.itu.int/rec/T-REC-H.264/en, HEVC (its specification is found at the ITU website, T recommendation, H series, h265, http://www.itu.int/rec/T-REC-H.265-201612-I/en);
- 3D-HEVC (an extension of HEVC whose specification is found at the ITU website, T recommendation, H series, h265, http://www.itu.int/rec/T-REC-H.265-201612-I/en annex G and I);
- VP9 developed by Google; or
- AV1 (AOMedia Video 1) developed by Alliance for Open Media.

The data stream is stored in a memory that is accessible, for example through a network 22, by a decoder 23. Decoder 23 comprises different circuits implementing different steps of the decoding. Decoder 23 takes a data stream generated by an encoder 21 as an input and provides a sequence of 3D scenes 24 to be rendered and displayed by a volumetric video display device, like a Head-Mounted Device (HMD). Decoder 23 obtains the stream from a source 22. For example, source 22 belongs to a set comprising:
- a local memory, e.g. a video memory or a RAM (or Random-Access Memory), a flash memory, a ROM (or Read Only Memory), a hard disk;
- a storage interface, e.g. an interface with a mass storage, a RAM, a flash memory, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth® interface); and
- a user interface such as a Graphical User Interface enabling a user to input data.

Decoder 23 comprises a circuit 234 for extract data encoded in the data stream. Circuit 234 takes a data stream as input and provides metadata 232 corresponding to metadata 212 encoded in the stream and a two-dimensional video. The video is decoded by a video decoder 233 which provides a sequence of frames. Decoded frames comprise color and depth information. A frame is an atlas, that is image data comprising a set of patches packed in the frame. A patch is image data comprising information to retrieve points of the 3D scene to reconstruct. In a variant, video decoder 233 provides two sequences of frames, one comprising color information, the other comprising depth information.

According to the present principles, metadata 232 comprise at least one validity domain associated with at least one patch of the atlas. A validity domain is an information representative of a part of said viewing zone of the 3D space of the 3D scene.

A circuit 231 uses metadata 232 to un-project color and depth information from decoded frames to provide a sequence of 3D scenes 24. Sequence of 3D scenes 24 corresponds to sequence of 3D scenes 20, with a possible loss of precision related to the encoding as a 2D video and to the video compression.

A 3D scene is retrieved from an atlas in which a plurality of patches is packed. According to the present principles, circuit 231 de-project pixels of a subset of the patches of the atlas. Circuit 231 selects only patches which are associated (via metadata 232) to a validity domain encompassing the current point of view of the rendering. In a variant, if a patch is associated to no validity domain, this patch is always used for de-projecting.

In an embodiment of the present principles, metadata 232 comprise a collection of a patch data. In a patch data item, the patch is associated with projection data comprising parameters of the projection operation used for generating this patch. Metadata 232 also comprise a collection of projection data and a projection data is associated with a validity domain. In this embodiment, circuit 231 selects, for de-projecting, the patches which are associated with a projection data which is, itself, associated with a validity domain encompassing the current point of view.

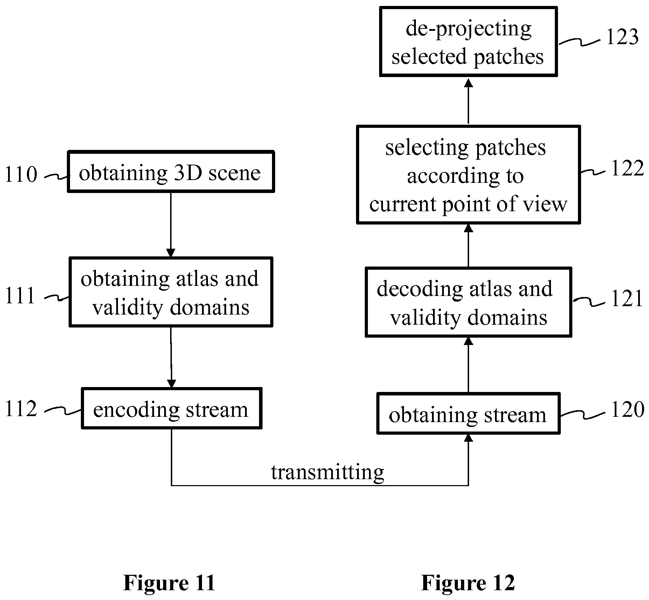

**Figure 3** shows an example architecture of a device 30 which may be configured to implement a method described in relation with figures 11 and 12. Encoder 21 and/or decoder 23 of figure 2 may implement this architecture. Alternatively, each circuit of encoder 21 and/or decoder 23 may be a device according to the architecture of Figure 3, linked together, for instance, via their bus 31 and/or via I/O interface 36.

Device 30 comprises following elements that are linked together by a data and address bus 31:
- a microprocessor 32 (or CPU), which is, for example, a DSP (or Digital Signal Processor);
- a ROM (or Read Only Memory) 33;
- a RAM (or Random Access Memory) 34;
- a storage interface 35;
- an I/O interface 36 for reception of data to transmit, from an application; and
- a power supply, e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with examples, the device 30 is configured to implement a method described in relation with figures 11 and 12, and belongs to a set comprising:
- a mobile device;
- a communication device;
- a game device;
- a tablet (or tablet computer);
- a laptop;
- a still picture camera;
- a video camera;
- an encoding chip;
- a server (e.g. a broadcast server, a video-on-demand server or a web server).

**Figure 4** shows an example of an embodiment of the syntax of a stream when the data are transmitted over a packet-based transmission protocol. Figure 4 shows an example structure 4 of a volumetric video stream. The structure consists in a container which organizes the stream in independent elements of syntax. The structure may comprise a header part 41 which is a set of data common to every syntax elements of the stream. For example, the header part comprises some of metadata about syntax elements, describing the nature and the role of each of them. The header part may also comprise a part of metadata 212 of figure 2, for instance the coordinates of a central point of view used for projecting points of a 3D scene onto frames 2111 and 2112. The structure comprises a payload comprising an element of syntax 42 and at least one element of syntax 43. Syntax element 42 comprises data representative of the color and depth frames. Images may have been compressed according to a video compression method.

Element of syntax 43 is a part of the payload of the data stream and may comprise metadata about how frames of element of syntax 42 are encoded, for instance parameters used for projecting and packing points of a 3D scene onto frames. Such metadata may be associated with each frame of the video or to group of frames (also known as Group of Pictures (GoP) in video compression standards). According to the present principles, metadata of element of syntax 43 also comprise at least one validity domain associated with at least one patch of the atlas. A validity domain is an information representative of a part of said viewing zone of the 3D space of the 3D scene and may be encoded according to different representations and structures. Examples of such representations and structures are provided in the present disclosure.

For example, metadata comprise a collection of at least one validity domain. Items of this collection may be indexed, for example by a letter or by an integer. Metadata further comprise a collection of projection data comprising at least a reference to one of the validity domains. The reference may be, for instance the index of the validity domain in the collection or a pointer to the memory address of this data. In this example, metadata also comprise a collection of patch data comprising a reference to a patch and a reference to one of the projection data.

**Figure 5** illustrates the patch atlas approach with an example of 4 projection centers. 3D scene 50 comprises a character. For instance, center of projection 51 is a perspective camera and camera 53 is an orthographic camera. Cameras may also be omnidirectional cameras with, for instance a spherical mapping (e.g. Equi-Rectangular mapping) or a cube mapping. The 3D points of the 3D scene are projected onto the 2D planes associated with virtual cameras located at the projection centers, according to a projection operation described in projection data of metadata. In the example of figure 5, projection of the points captured by camera 51 is mapped onto patch 52 according to a perspective mapping and projection of the points captured by camera 53 is mapped onto patch 54 according to an orthographic mapping.

The clustering of the projected pixels yields a multiplicity of2D patches, which are packed in a rectangular atlas 55. The organization of patches within the atlas defines the atlas layout. In an embodiment, two atlases with identical layout: one for texture (i.e. color) information and one for depth information. Two patches captured by a same camera or by two distinct cameras may comprise information representative of a same part of the 3D scene, like, for instance patches 54 and 56.

The packing operation produces a patch data for each generated patch. A patch data comprises a reference to a projection data (e.g. an index in a table of projection data or a pointer (i.e. address in memory or in a data stream) to a projection data) and information describing the location and the size of the patch within the atlas (e.g. top left corner coordinates, size and width in pixels). Patch data items are added to metadata to be encapsulated in the data stream in association with the compressed data of the one or two atlases.

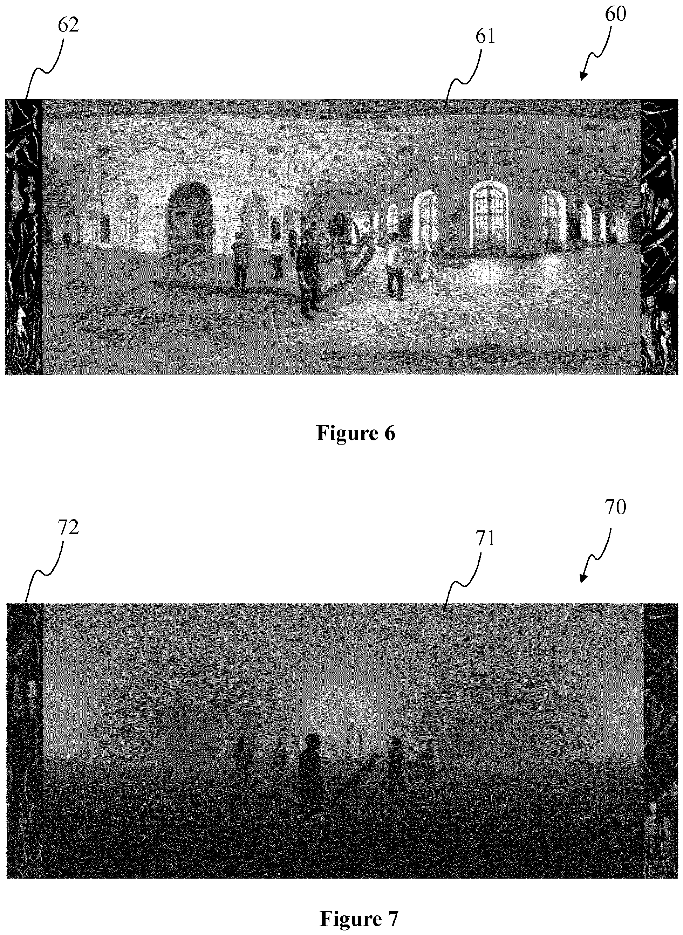

**Figure 6** shows an example of a layout of an atlas 60 comprising the texture information (e.g. RGB data or YUV data) of the points of a 3D scene, according to a non-limiting embodiment of the present principles. As explained in relation to figure 5, an atlas is an image packing patches, a patch being a picture obtained by projecting a part of the points of the 3D scene.

The layout of an atlas is the way patches are organized on the image plane of the atlas. In the example of figure 6, atlas 60 comprises a first part 61 comprising the texture information of the points of the 3D scene that are visible from a point of view and one or more second parts 62. The texture information of the first part 61 may for example be obtained according to an equirectangular projection mapping, an equirectangular projection mapping being an example of spherical projection mapping. In the example of figure 6, the second parts 62 are arranged at the left and right borders of the first part 61 but the second parts may be arranged differently. Second parts 62 comprise texture information of parts of the 3D scene that are complementary to the part visible from the point of view. The second parts may be obtained by removing from the 3D scene the points that are visible from the first viewpoint (the texture of which being stored in the first part) and by projecting the remaining points according to the same point of view. The latter process may be reiterated iteratively to obtain at each time the hidden parts of the 3D scene. According to a variant, the second parts may be obtained by removing from the 3D scene the points that are visible from the point of view, for example a central point of view (the texture of which being stored in the first part) and by projecting the remaining points according to a point of view different from the first point of view, for example from one or more second point of view of a space of view centred onto the central point of view (e.g. the viewing space of a 3DoF rendering).

The first part 61 may be seen as a first large texture patch (corresponding to a first part of the 3D scene) and the second parts 62 comprises smaller textures patches (corresponding to second parts of the 3D scene that are complementary to the first part). Such an atlas has the advantage to be compatible at the same time with 3DoF rendering (when rendering only the first part 61) and with 3DoF+ / 6DoF rendering.

**Figure 7** shows an example of an atlas 70 comprising the depth information of the points of the 3D scene of figure 6 and having the same layout than the atlas of figure 6, according to a non-limiting embodiment of the present principles. Atlas 70 may be seen as the depth image corresponding to texture image 60 of figure 6.

Atlas 70 comprises a first part 71 comprising the depth information of the points of the 3D scene that are visible from the central point of view and one or more second parts 62. Atlas 70 may be obtained in a same way as atlas 60 but contains the depth information associated with the points of the 3D scene instead of the texture information.

For 3DoF rendering of the 3D scene, only one point of view, typically the central point of view, is considered. The user may rotate his head in three degrees of freedom around the first point of view to watch various parts of the 3D scene, but the user cannot move this unique point of view. Points of the scene to be encoded are points which are visible from this unique point of view, and only the texture information is needed to be encoded / decoded for the 3DoF rendering. There is no need to encode points of the scene that are not visible from this unique point of view for a 3DoF rendering as the user cannot access to them.

With regard to 6DoF rendering, the user may move the viewpoint everywhere in the scene. In this case, it is required to encode every point (depth and texture) of the scene in the bitstream as every point is potentially accessible by a user who can move his/her point of view. At the encoding stage, there is no means to know, a priori, from which point of view the user will observe the 3D scene.

With regard to 3DoF+ rendering, the user may move the point of view within a limited space around a central point of view. This enables to experience parallax. Data representative of the part of the scene visible from any point of the space of view is to be encoded into the stream, including the data representative of the 3D scene visible according to the central point of view (i.e. the first parts 61 and 71). The size and shape of the space of view may for example be decided and determined at the encoding step and encoded in the bitstream. The decoder may obtain this information from the bitstream and the renderer limits the space of view to the space determined by the obtained information. According to another example, the renderer determines the space of view according to hardware constraints, for example in relation to capabilities of the sensor(s) that detects the movements of the user. In such a case, if, at the encoding phase, a point visible from a point within the space of view of the renderer has not been encoded in the bitstream, this point will not be rendered. According to a further example, data (e.g. texture and/or geometry) representative of every point of the 3D scene is encoded in the stream without considering the rendering space of view. To optimize the size of the stream, only a subset of the points of the scene may be encoded, for instance the subset of points that may be seen according to a rendering space of view.

According to the present principles, metadata are set to associate patches of an atlas with a validity domain. A patch data item is added to metadata for each patch. A patch data item comprises at least one reference to a projection data item and information representative of the location and the size of the patch with in the atlas. Projection data are a collection of projection data items, a projection data item comprising information representative of a projection center and parameters of the associated projection operation. In a first embodiment of the present principles, a description of the validity domain associated with the patch is added to the patch data item. In a variant of this first embodiment, as a validity domain may be shared by several patches, a collection of descriptions of the different validity domains is added to metadata and a reference to one of the validity domains is added to each patch data item. A reference may be an index of the validity item in the collection or, for instance, a memory address. In another embodiment, as the number of 2D patches necessary to represent a 3D scene may typically range between several dozens to several hundreds, adding an additional piece of information to each patch data item in the metadata may significantly increase the metadata bitrate and, consequently, increase the required computing power to parse them at rendering side. In this other embodiment, the validity domain is associated with the projection centers used to generate patches. For example, in a 3DoF+ use case, 4 projection centers are typically sufficient to capture the 3D scene: the extra metadata payload for encoding a validity domain for each projection center is therefore negligible. In a 6DoF use case, with a larger viewing zone of the 3D scene, the number of required projection centers increases but remains of a much smaller order of magnitude than the total number of patches. In this embodiment, a description of a validity domain is added to each projection data item. As a reference to a projection data item is already present in each patch data item, the association between a patch and a validity domain is encoded transitively; every patch generated according to a projection center sharing the same validity domain. In a variant of this embodiment, metadata comprising a collection of descriptions of the different validity domains are added to metadata and a reference to one of the validity domains is added to each projection data item. In another embodiment, depending on the 3DoF+ or 6DoF use case for consuming the volumetric video, and depending on the geometrical and photometrical complexity of the 3D scene transported by the volumetric video, the validity domain may be assigned to clusters of projection centers instead of a single projection center. Also, depending on the complexity of the 3D scene, different projection centers may co-exist at a same spatial position.

A validity domain is a part of the viewing zone. It may be connected or composed of several connected regions of the space. Different validity domains may share the same connected regions. In an embodiment of the present principle, combinable with the different above embodiments, metadata comprise a collection of descriptions of connected regions of the viewing zone and the description of a validity zone is a set of references to items of the connected region collection.

A possible syntax for the metadata related to validity domain is proposed for different use cases in the following using syntax description language (SDL) as defined in MPEG-4 (ISO/IEC 14496-1:2010: Information technology - Coding of audio-visual objects - Part 1: Systems).

For example, in an embodiment adding the description of the validity domain in projection data items:

```
       aligned(8) class projectionCenter {
            (...)
           Validity();
       }
```

For example, in an embodiment encoding a set of references to connected regions in projection data items, an example of syntax allowing a maximum of 7 connected domains among 256 described regions in a collection may be:

```
       aligned(8) class projectionCenter {
            (...)
           bit(5)reserved = 0;
           unsigned int(3) num domains;
            for (int i = 0; i < num domains; i++)
               unsigned int(8) validity_id;
       }
```

Metadata 212 and 232 of figure 2 may, for instance, be transported at the ISOBMFF container level as a timed metadata track or inserted as SEI (Supplemental Enhancement Information) in the elementary video streams (e.g. HEVC).

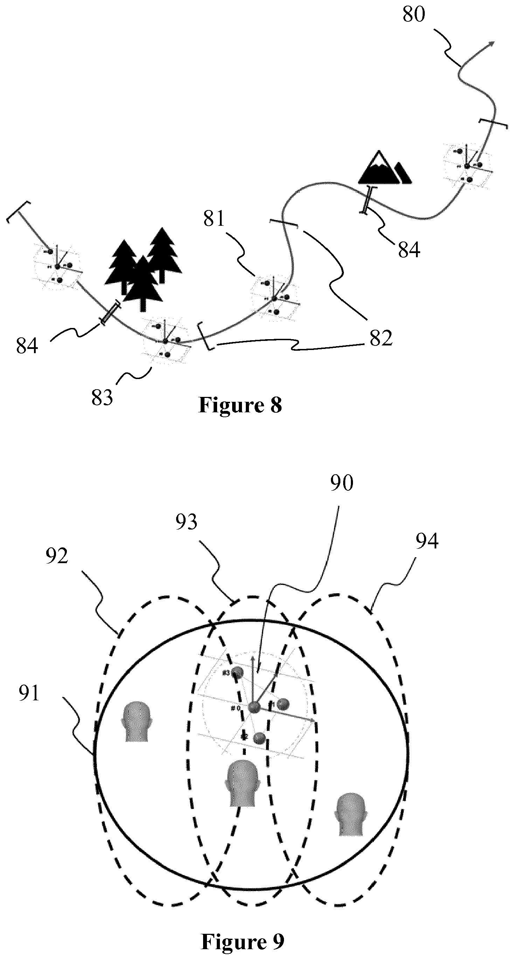

Error! Reference source not found. shows an example of validity domains located in a viewing zone set up as a navigation path. Patches of the atlas are generated according to 16 projection centers organized in four 3DoF+ viewing spots as spots 81 and 83, comprising 4 projection centers each. The 16 projection centers are associated with a segment along the predefined navigation path. In the example of figure 8, projection centers of viewing spot 81 are associated with a validity domain defined around path segment 82. Projection centers of viewing spot 83 are associated with a validity domain determined around path segment 84. Validity domains may overlap. A validity domain may be included in another one. The definition of validity domains (segments of the viewing navigation path in the example of figure 8) is scene dependent. It is for example constrained by occluding objects of the scene, such as the trees and mountains in figure 8. In an example, a projection center of viewing spot 81 may be associated to validity domain 84 while the three other ones are associated to validity domain 82.

At the rendering, the decoder determines which validity domains encompass the current point of view and uses patches associated (directly or transitively) with these validity domains. In the example of figure 8, when the current point of view for the rendering of the 3D scene in the viewport is located close to viewing spot 81, validity domains 82 and 84 encompass the current point of view. In this case, patches referring to the 8 projection centers of viewing spots 81 and 83 are used to de-project points of the 3D scene. When the current point of view is close to viewing spot 83, only validity domain 84 encompass the current point of view and only patches associated with projection centers of viewing spot 83 and, in the example above, one of the projection centers of viewing spot 81, are used for the reconstruction of the 3D scene.

An example of syntax for validity domains may be:

```
       aligned(8) class Validity-Path() extends Validity {
               unsigned int(32) start_segment;
               unsigned int(32) length_segment;
        }
```

Start segment being a position on the pre-determined track and length segment being a length in a pre-determined unit. The path and the measurement unit are known by the encoder and the decoder.

**Figure 9** shows an example of three overlapping validity domains for projection centers within a spherical viewing zone. Patches of the atlas representative of the 3D scene are generated according to four projection centers around a viewing spot 90 parametrized to encode points of the 3D scene for a viewing zone 91. So, the atlas comprises information to re-build the 3D scene when viewed from any point of view of viewing zone 91. In this example, circuit 211 of figure 2 delimited three validity domains 92, 93 and 94. Each of the four centers of projection may be mapped to one, two or three validity domains by circuit 211. An example syntax for ovoid validity domains may be:

```
       aligned(8) class Validity-Ovoid() extends Validity {
           Ovoid() ;
       }
       aligned(8) class Ovoid() {
               signed int(32) x_center;
               signed int(32) y_center;
               signed int(32) z_center;
               signed int(32) theta_angle;
               signed int(32) phi_angle;
               unsigned int(32) a_radius;
               unsigned int(32) c_radius;
       }
```

Validity domains may also be cubes, for example defined by the following example syntax:

```
       aligned(8) class Validity-Cuboid() extends Validity {
               Cuboid() ;
        }
       aligned(8) class Cuboid() {
               signed int(32) x_min;
               signed int(32) x_max;
               signed int(32) y_min;
               signed int(32) y_max;
               signed int(32) z_min;
               signed int(32) z_max;
        }
```

An advantage of the present principles is to enable a virtual 6DoF navigation with a patch-atlas based volumetric format. The assignment of a validity viewing domain to each patch in the atlas(es) enables an efficient and flexible representation of the 3D scene information over a large scene domain. The decoder can efficiently select the patches needed for rendering the current viewport during the navigation, only relying on the current point of view. Another advantage is to provide a mechanism to deal with only locally consistent 3D scene geometry, for example for 3D content acquired by a large rig of cameras with estimated depth information only consistent for clusters of cameras close one to each other.

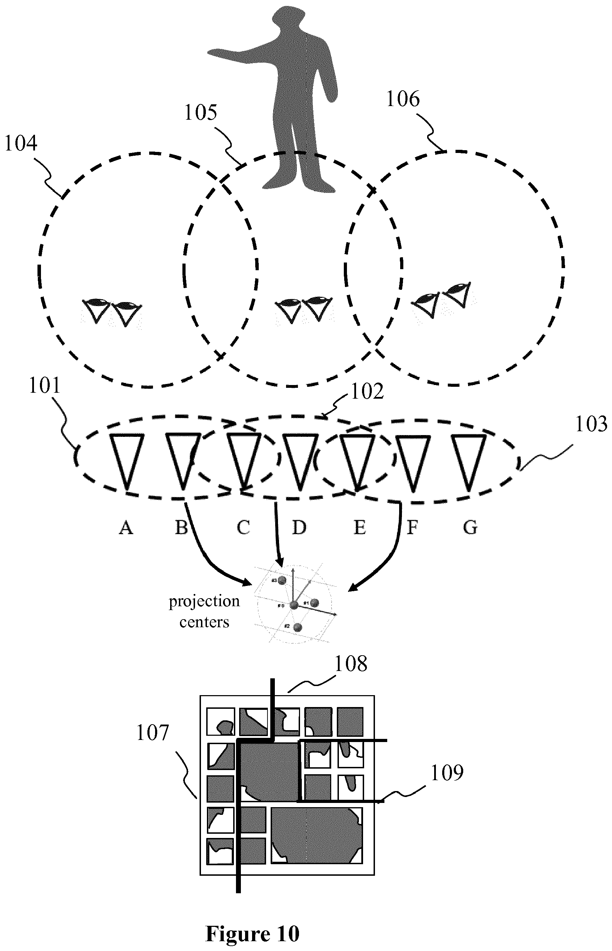

**Figure 10** shows an example of a linear 7-cameras acquisition rig. When depth information representative of the captured 3D scene is estimated by photogrammetry from natural images obtained from such a rig (and not measured with depth (e.g. time-of-flight) sensors or obtained from computer generated models), inconsistency may be observed between depth maps attached to different input cameras, especially between distant cameras. A patch-based analysis of the 3D scene with such inconsistent depth input is doomed to fail when globally applied to the whole input data. In such a case, it is preferable to locally process clusters of cameras close to each other, and obtain multiple patch-based representations which are locally valid for the 3D scene parts viewed from those cameras. In the example of figure 10, three such overlapping clusters are considered. The patches within the atlas are either obtained from input data coming from cluster 101 of cameras A, B, C, from cluster 102 cameras C, D, E or cluster 103 cameras E, F, G. Each of the 3 partitions of patches, independently each from the others, enables to reconstruct a consistent 3D scene at rendering side. However, such a reconstruction is valid only for a limited viewing validity domain.

The transmission format described by the present principles is well suited to convey such patch data as depicted in figure 10. The projection centers used for 3D-to-2D projection of camera cluster 101 (A, B, C), second camera cluster 102 (C, D, E) and third camera cluster 103 (E, F, G) are considered as different, even if located at the same position. Three distinct validity domains are thus associated with the three distinct sets of projection centers. Centers of projection of cluster 101 are associated with validity domain 104, cluster 102 with domain 105 and cluster 103 with domain 106. In the atlas, a group 107 of patches are then associated with validity domain 104, a group 108 to domain 105 and a group 109 to domain 106. At decoding side, based on the validity domain metadata, the rendering engine is then able to switch between locally consistent patch-based 3D representations, depending on the current point of view on the 3D scene.

**Figure 11** illustrates a method of encoding a 3D scene for a viewing zone in a data stream according to a non-restrictive embodiment of the present principles. At a step 110, the 3D scene to encode is obtained from a source. Metadata representative of the parameters and conditions of the encoding are jointly obtained from the same source or from a different source. The viewing zone (i.e. the part of the 3D space of the 3D scene the atlases have to be prepared for) is a piece of these metadata. Projection centers and parameters of the associated projection operations are also comprised in these metadata. At a step 111, patches are generated, for example by circuit 211 of figure 2, according to the obtained metadata. At least one validity domain is determined. Information of the association between patches and validity domains are added to the metadata, for example, according to one of the embodiment described in relation to figures 5 to 9. At a step 112, atlases packing generated patches and every related metadata are encoded in a data stream. The data stream is sent to a destination, for example a memory and/or a transmission network.

**Figure 12** illustrates a method of decoding a 3D scene for a point of view in a viewing zone from a data stream according to a non-restrictive embodiment of the present principles. At a step 120, the data stream is obtained from a source which may be a memory, a disc or a network, for example. At a step 121, an atlas packing patches is decoded from the stream, jointly to metadata comprising information relative to the patches, the description of validity domains and a direct or transitive association between patches and validity domains. At a step 122, a subset of patches of the atlas are selected according to the current point of view on the 3D scene under reconstruction. Validity domains encompassing the current point of view are determined and only patches associated with these validity domains are de-projected as points of the 3D scene at a step 123.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for decoding a 3D scene viewed from a point of view located in a viewing zone of the 3D space of the 3D scene, the method comprising:
- decoding an atlas and metadata from a data stream,
- the atlas being image data representative of at least one patch;
a patch being image data representative of a projection of a part of the 3D scene onto an image plane;
- said metadata comprising at least one validity domain associated with at least one patch of said atlas;
a validity domain being an information representative of a part of said viewing zone of the 3D space of the 3D scene;
- de-projecting pixels of patches associated with a validity domain encompassing the point of view.

2. The method of claim 1, wherein the metadata comprise:
- a collection of at least one validity domain;
- a collection of projection data comprising at least a reference to one of the validity domains, a projection data being representative of a projection used for generating the patches of the atlas; and
- a collection of patch data comprising a reference to a patch and a reference to one of the projection data; and
- de-projecting pixels of patches referenced in a patch data referencing a projection data referencing a validity domain encompassing the point of view,
said projection data being used for de-projecting pixels of said patches.

3. The method of claim 1 or claim 2, wherein the metadata comprise
- a collection of at least one connected domain,
a connected domain being an information representative of a connected part of said viewing zone of the 3D space of the 3D scene;
- a validity domain being a collection of references to a connected domain.

4. A device for decoding a 3D scene viewed from a point of view located in a viewing zone of the 3D space of the 3D scene, the device comprising a processor configured for:
- decoding an atlas and metadata from a data stream,
- the atlas being image data representative of at least one patch;
a patch being image data representative of a projection of a part of the 3D scene onto an image plane;
- said metadata comprising at least one validity domain associated with at least one patch of said atlas;
a validity domain being an information representative of a part of said viewing zone of the 3D space of the 3D scene;
- de-projecting pixels of patches associated with a validity domain encompassing the point of view.

5. The device of claim 4, wherein the metadata comprise:
- a collection of at least one validity domain;
- a collection of projection data comprising at least a reference to one of the validity domains, a projection data being representative of a projection used for generating the patches of the atlas; and
- a collection of patch data comprising a reference to a patch and a reference to one of the
projection data; and
wherein said processor is configured for:
- de-projecting pixels of patches referenced in a patch data referencing a projection data referencing a validity domain encompassing the point of view,
said projection data being used for de-projecting pixels of said patches.

6. The device of claim 4 or claim 5, wherein the metadata comprise
- a collection of at least one connected domain,
a connected domain being an information representative of a connected part of said viewing zone of the 3D space of the 3D scene;
- a validity domain being a collection of references to a connected domain.

7. A method for encoding a 3D scene to be viewed from a viewing zone of the space of the 3D scene, the method comprising:
- encoding an atlas and metadata,
- the atlas being image data representative of at least one patch;
a patch being image data representative of a projection of a part of the 3D scene onto an image plane; and
- the metadata comprising at least one validity domain associated with at least one patch of said atlas;
a validity domain being an information representative of a part of said viewing zone of the 3D space of the 3D scene.

8. The method of claim 7 wherein the metadata comprise:
- a collection of at least one validity domain;
- a collection of projection data comprising at least a reference to one of the validity domains, a projection data being representative of a projection used for generating the patches of the atlas; and
- a collection of patch data comprising a reference to a patch and a reference to one of the projection data.

9. The method of claim 7 or claim 8, wherein the metadata comprise:
- a collection of at least one connected domain,
a connected domain being an information representative of a connected part of said viewing zone of the 3D space of the 3D scene;
- a validity domain being a collection of references to a connected domain.

10. A device for encoding a 3D scene to be viewed from a viewing zone of the space of the 3D scene, the device comprising a processor configured for:
- encoding an atlas and metadata,
- the atlas being image data representative of at least one patch;
a patch being image data representative of a projection of a part of the 3D scene onto an image plane; and
- the metadata comprising at least one validity domain associated with at least one patch of said atlas;
a validity domain being an information representative of a part of said viewing zone of the 3D space of the 3D scene.

11. The method of claim 10 wherein the metadata comprise:
- a collection of at least one validity domain;
- a collection of projection data comprising at least a reference to one of the validity domains, a projection data being representative of a projection used for generating the patches of the atlas; and
- a collection of patch data comprising a reference to a patch and a reference to one of the projection data.

12. The method of claim 10 or claim 11, wherein the metadata comprise:
- a collection of at least one connected domain,
a connected domain being an information representative of a connected part of said viewing zone of the 3D space of the 3D scene;
- a validity domain being a collection of references to a connected domain.

13. A data stream representative of a 3D scene to be viewed from a viewing zone of the space of the 3D scene,
- the data stream comprising an atlas and metadata,
- the atlas being image data representative of at least one patch;
a patch being image data representative of a projection of a part of the 3D scene onto an image plane; and
- the metadata comprising at least one validity domain associated with at least one patch of said atlas;
a validity domain being an information representative of a part of said viewing zone of the 3D space of the 3D scene.

14. The data stream of claim 13 wherein the metadata comprise:
- a collection of at least one validity domain;
- a collection of projection data comprising at least a reference to one of the validity domains, a projection data being representative of a projection used for generating the patches of the atlas; and
- a collection of patch data comprising a reference to a patch and a reference to one of the projection data.

15. The data stream of claim 13 or claim 14, wherein the metadata comprise:
- a collection of at least one connected domain,
a connected domain being an information representative of a connected part of said viewing zone of the 3D space of the 3D scene;
a validity domain being a collection of references to a connected domain.
